# EUROPEAN PATENT SPECIFICATION

(11) **EP 0 972 803 B1**
(45) Date of publication and mention of the grant of the patent: **07.05.2003**
(21) Application number: 99401759.8
(22) Date of filing: 13.07.1999
(51) Int. Cl.: C08L 53/00, C08L 23/08, C08K 3/22, H01B 7/42, H01B 3/44

(54) **Flame-and wear-resisting resin compositions**
Abriebfeste und flammwidrige Harzzusammensetzungen
Compositions de résines ignifuges et résistantes à l'usure

(30) Priority: 15.07.1998 JP 20090798; 26.04.1999 JP 11852999
(43) Date of publication of application: 19.01.2000
(73) Proprietor: Sumitomo Wiring Systems, Ltd., Yokkaichi-City, Mie, 510-8503 (JP)
(72) Inventor: Yamano, Yoshiaki, Yokkaichi-city, Mie 510-8503 (JP); Fujimoto, Hiroshi, Yokkaichi-city, Mie 510-8503 (JP); Matsumoto, Shinichi, Yokkaichi-city, Mie 510-8503 (JP); Hase, Tatsuya, Yokkaichi-city, Mie 510-8503 (JP); Sato, Masashi, Yokkaichi-city, Mie 510-8503 (JP)
(74) Representative: Uchida, Kenji

(56) References cited:
- EP-A- 0 429 236
- EP-A- 0 508 415
- WO-A-93/12180
- US-A- 5 561 185
- PATENT ABSTRACTS OF JAPAN vol. 017, no. 309 (C-1070), 14 June 1993 (1993-06-14) & JP 05 025331 A (FUJIKURA LTD), 2 February 1993 (1993-02-02)

## Description

The present invention relates to coating materials for electrical cables used in automobiles. The invention concerns in particular flame- and wear-resistant resin compositions that are suitable for use as such coating materials. The invention also relates to the electrical cables for automobiles using such resin compositions. The flame- and wear-resistant resin compositions according to the invention must not only satisfy the conditions usually required for electrical cable coating materials, such as flame resistance, wear resistance, tensile strength, bending strength and flexibility, but also generate no noxious gas, such as halogen-based gas, when burned. These resin compositions may be used as insulating coating materials for automotive electrical cables.

As an insulating coating material for electrical cables, poly(vinyl chloride) (PVC) is commonly used. The reason for this preference is that PVC satisfies the prerequisites for coating materials, such as high insulation capacity, flame resistance, oil-proofing, water-proofing and ozone resistance. Further, by blending with an appropriate additive such as a plasticizer or a filler, PVC can easily provide a wide spectrum of products, depending on the purpose, ranging from heat-proof use to cold-proof use, or from hard quality products to soft quality products.

However, PVC is a halogen-containing polymer. When PVC is burned, it generates noxious gases such as hydrogen chloride. When a cable containing PVC is set on fire, the hydrogen chloride gas thus generated may cause secondary damages such as corrosion of metals used for wiring. Moreover, the environmental awareness, which has been developing recently, obliges one to reduce or recycle industrial wastes such as plastic materials.

PVC is already applied for coating the wiring-harness cables used in automobiles. In recent years, the hydrogen chloride gas generated therefrom via incineration has created problems. It is therefore necessary to use non-halogen-type, flame-resistant coating materials that generate little toxic gas, e.g. a hydrogen halide gas.

Typical non-halogen-type flame-resistant materials include a mixture consisting of a polyolefin resin as a non-halogen-type resin and a metal hydroxide as a flame-resistant compound. However, these non-halogen-type flame-resisting materials are less flexible and foldable, compared to the case where PVC is used. In addition, in order to secure the flame resistance, a considerable amount of metal hydroxide has to be mixed. Then, the mechanical strength such as wear resistance or tensile strength, and the flexibility represented by elongation after drawing , are adversely affected, as the amount of flame-resisting agents (flame retarders) increases. Furthermore, cold-proofing capacity, low-temperature flexibility and whitening resistance also deteriorate. When the coating is as thin as 0.1 to 1 mm, as in the case of automotive electrical cables, a material having low wear resistance is not suitable for electrical cable coatings. Further, when such a thin coating lacks flexibility, wiring work becomes more constraining.

In particular, when a coating material is kept for a long time in hot temperature environments, it undergoes aging, and its flexibility in such environments, i.e. its heat-resistant flexibility, deteriorates. When the heat-resistant flexibility is low, the coating material of automobile's electrical cables, which are often exposed to such environments, undergoes cracking, when carrying out maintenance work. Furthermore, as automobile's electrical cables are also subjected to cold environments, the deterioration of cold proofing, low temperature deflection or bending capacity, and whitening resistance make the material unsuitable for such a use.

Japanese Patent Application, published under the number HEI-7-288046, discloses a non-halogen-type coating material consisting of an ethylene-propylene copolymer having a molecular weight of at least 200,000, an ethylene-type copolymer, a metal hydroxide and acetylene black. Examples of the ethylene-type copolymer include ethylene-methyl methacrylate copolymer, ethylene-ethyl acrylate copolymer, ethylene-vinyl acetate copolymer and ethylene-butene copolymer. In this document, a copolymer consisting of ethylene and a vinyl-type monomer, which has a density lower than that of ultra-low density polyethylene, is described as a preferred compound.

On the other hand, Japanese Patent Application, published under the number HEI-9-31271, discloses two sorts of ethylene-olefin copolymer (olefin being, e.g. propylene) having a different melt flow-rate, density and molecular weight distribution, as well as flame- and wear-resistant resin compositions containing flame-resistant agents. In this disclosure, the flame-resisting agent is dispersed and maintained as such in an ethylene-olefin (propylene, for example) copolymer having a low density, whereas wear-resisting characteristic is conferred by an ethylene-olefin (e.g., propylene) copolymer having a middle level of density. In these resin compositions, when a sufficient amount of flame-resistant agents is to be added, the proportion of low-density ethylene-olefin copolymer in the total amount of polymers has to be increased. Then, mechanical strengths, e.g. wear resistance, are lowered in relative terms. As a result, it is difficult to keep the flame resistance and the wear resistance in equilibrium. Alternatively, in order to enhance the wear resistance, proportion of the ethylene-olefin copolymer having a middle-level density may be increased. Then, however, the elongation capacity of the cable's coating material becomes decreased, so that necessary flexibility cannot be obtained. As a result, it becomes also difficult to strike a balance between wear resistance and flexibility.

JP-A-05025331 discloses composition obtained from blend comprising 10-80 pts.wt. of ethylene-vinyl acetate copolymer and/or ethyl-(m)ethyl acrylate copolymer, maleic acid and/or polyolefin copolymer, etc., and block or random copolymer, with metal hydroxide and carbon, useful for electric wire or domestic appliances, etc..

EP-A-0 508 415 discloses mat film or sheet prepared from a polymer blend, whereas US-A-5 561 185 discloses electric wire with cover layer composed of composition prepared by blending resin mixture of propylene-series resin, modified polyethylene and ethylene-series copolymer with metal hydrate.

Considering the problems mentioned above, an object of the present invention is to provide a flame- and wear-resistant resin composition by improving the dispersion of flame-resisting agents, such that, even if a necessary amount of flame-resistant agents is added in the composition, its mechanical strengths such as wear resistance can be maintained on a satisfactory level. Another object of the invention is to provide an electrical cable for automobiles using such a composition.

To this end, there is provided a flame- and wear-resistant resin composition comprising a polymeric material consisting of a propylene-ethylene block copolymer and a random ethylene-vinyl acetate copolymer; and a metal hydroxide, the polymeric material including the propylene-ethylene block copolymer in a proportion ranging from 90 to 45 % by weight with respect to the weight of the polymeric material, while the ethylene-vinyl acetate copolymer in a proportion ranging from 10 to 55 % by weight. The resin composition includes the metal hydroxide in an amount ranging from 30 to 300 parts by weight, relative to 100 parts by weight of the polymeric material.

When flexibility is taken into account, the ethylene-vinyl acetate copolymer contains vinyl acetate preferably in a proportion of at least 15 % by weight, relative to the weight of ethylene-vinyl acetate copolymer.

In particular, when a high flexibility in high temperature environments (high heat-resistant flexibility) is required, the proportion of vinyl acetate is preferably at least 40 % by weight, relative to the weight of ethylene-vinyl acetate copolymer.

The resin composition preferably further comprises silane-based coupling agents in a proportion of at least 0.1 part by weight, relative to 100 parts by weight of the polymeric material.

Advantageously, the silane-based coupling agent is an amino-containing product.

Preferably yet, the flame- and wear-resistant resin composition further comprise unsaturated fatty acid amides in a proportion of at least 0.1 part by weight, relative to 100 parts by weight of the polymeric material.

The electrical cable for automobiles according to the invention comprises an insulating coating, in which the flame- and wear-resistant resin composition of the invention is used.

The flame- and wear-resistant resin composition of the invention may be used as a coating material in general, but in particular for electrical cables, especially those used in automobiles.

The above and other objects, features and advantages of the present invention will be made apparent from the following description of the preferred embodiments with reference to the accompanying drawings, in which:
FIG. 1 is a view schematically showing a flame resistance testing method;
FIG. 2 is a view schematically showing a wear resistance testing method;
FIG. 3 is a microscopic view of the texture of Example 11 of the invention before (a) and after (b) being subjected to heat-resistant flexibility testing; and
FIG. 4 is a microscopic view of the texture of Example 13 of the invention before (a) and after (b) being subjected to heat-resistant flexibility testing.

The flame- and wear-resistant resin composition according to the present invention is a resin composition comprising a polymeric material consisting of a propylene-ethylene block copolymer and an ethylene-vinyl acetate copolymer, and a flame-resistant agent consisting of a metal hydroxide.

The propylene-ethylene block copolymer (P-E block copolymer) as defined above is a block copolymer comprising polyethylene blocks and polypropylene blocks. This block copolymer may also include, in addition to the polypropylene and polyethylene blocks, a random zone where ethylene and propylene are randomly polymerized. Generally speaking, the propylene-ethylene copolymer can be classified into either a block copolymer or a random copolymer (copolymer solely consisting of random zones). Between them, propylene-ethylene random copolymer (P-E random copolymer) is known to have insufficient levels of hardness and wear resistance. In comparison with P-E random copolymer, P-E block copolymer has better physical characteristics, such as a higher crystallinity, hardness, wear resistance, flexibility and deflection. As for the dispersion efficiency of flame-resistant agents, P-E block copolymer has a median capacity ranging between homopolymers and random copolymers. Therefore, when using P-E block copolymer, addition of a large amount of flame-resistant agents is not required in order to secure the flame resistance. Accordingly, the deterioration of wear resistance and tensile strength, due to the addition of flame-resistant agents, can also be avoided.

The ethylene-vinyl acetate copolymer (E-VA copolymer) used in the present invention is a random copolymer of ethylene and vinyl acetate. A commercial E-VA product may be used for the purpose of the invention. The higher the content of vinyl acetate is, the more flexible the resin composition product is, and the greater its elongation is. Equally, when the content of vinyl acetate is higher, deterioration of the elongation value, due to aging of the electrical cable coating, will be prevented more efficiently. As a result, even when the electrical cable is maintained in high temperature environments and its coating materials undergo aging, a good flexibility may nonetheless be maintained. In this respect, it is to be noted that, when the E-VA copolymer is used alone, elongation of the product after aging becomes smaller as the content of vinyl acetate increases. The effect properly attributable to the resin composition of the invention is therefore surprising.

Usually, in order to confer flexibility on the product, a copolymer comprising at least 15 % by weight of vinyl acetate, relative to the weight of the E-VA copolymer, is preferably used.
Proportion of vinyl acetate in the E-VA copolymer may be chosen appropriately, depending on the proportion of E-VA copolymer in the total polymeric material, or the sought-after physical features. In general, when the proportion of E-VA copolymer in the total polymeric material is small, a copolymer comprising a higher proportion of vinyl acetate may be used. As mentioned above, from the point of view of conferring flexibility, it is preferable to use an E-VA copolymer in which the vinyl acetate moiety represents at least 15 % by weight of the total E-VA copolymer weight. Furthermore, when a good flexibility in high temperature environments is required, proportion of vinyl acetate preferably represents at least 40 % of the total E-VA copolymer weight. Then, a good heat-resistant flexibility can be secured in such environments which may cause aging of the coating materials.

The proportion of P-E block copolymer to E-VA copolymer in the polymeric material ranges from 90 / 10 to 45 / 55 % by weight. When the amount of P-E block copolymer is in excess of 90 % by weight, flexibility may not be sufficient for use as a cable coating material. Conversely, when its amount is smaller than 45 % by weight in the presence of flame-resistant agents, hardness and wear resistance could not be maintained in sufficiently high levels.

The proportion of P-E block copolymer to E-VA copolymer in the polymeric material may be varied in the above defined range, depending on the cable coatings thickness and the content of vinyl acetate in E-VA copolymer. When the coating is rather thick, it will take some time for the coating material to wear out. Need for wear resistance is therefore not so stringent. The coating material should therefore be chosen on the basis of flame resistance and flexibility as criteria. Then, the amount of E-VA copolymer may have to be increased. Conversely, when the coating is rather thin, the coating material to be used may have a less flexible nature. Even so, the electrical cables using such a coating may raise few problems as to flexibility. However, criteria for wear resistance will become more important, and the amount of P-E block copolymer should probably be increased. Further, as the vinyl acetate content in the E-VA copolymer increases, a lesser quantity of E-VA copolymer is needed for conferring flexibility and flame resistance to the resin composition. On the other hand, when the amount of E-VA copolymer is increased, the compatibility and wear resistance of P-E block copolymer tend to decrease. Therefore, proportion of E-VA copolymer in the polymeric material is preferably maintained at a low level.

The metal hydroxides used in the resin compositions of the present invention may include the hydroxides of a bivalent or trivalent metal, such as magnesium hydroxide, aluminum hydroxide and calcium hydroxide. Among them, magnesium hydroxide is preferably used.

The size of the metal hydroxide is not particularly limited. However, considering its dispersion into the polymer, its workability and its adaptability to the cable, the average diameter ranges preferably from 0.1 to 5 µm. When the diameter is smaller than 0.1 µm, the metal hydroxide particle is too powdery for easy handling. When its diameter exceeds 5 µm, its dispersion into the polymer tends to deteriorate.

The metal hydroxide of the invention is blended in a proportion of 30 to 300, preferably 50 to 150 parts by weight, relative to 100 parts by weight of the total polymeric material (total of P-E block copolymer and E-VA copolymer). When its proportion is smaller than 30 parts by weight, flame resistance cannot be maintained on sufficiently high levels. When its amount exceeds 300 parts by weight, physical properties such as elongation, tensile strength and wear resistance deteriorate, such that they are no longer suitable for use as coating materials.

In the resin composition of the present invention, a silane-based coupling agent is preferably added in a proportion of at least 0.1 part by weight, relative to 100 parts by weight of polymeric material. Likewise, an unsaturated fatty acid amide is preferably added in a proportion of at least 0.1 part by weight, relative to 100 parts by weight of polymeric material.

The silane-based coupling agent supra is represented by the general formula:

R-Si (OR')₃ or R-Si (OR')₂

In the above formula, OR' represents a reaction group such as a methoxy group or an ethoxy group. This reaction group reacts with a metal hydroxide contained in the inventive composition. Another reaction group R represents vinyl, epoxy, methacryl, amino, mercapto, or other analogous groups. This reaction group develops an affinity for the polymeric material; so that the metal hydroxide and the E-VA copolymer are bonded more tightly. Although E-VA copolymer normally has a rather weak wear resistance, the performance is improved by virtue of this bonding. For this reason, in the silane-based coupling agent used in the present invention, R is preferably an amino-containing group that has a high affinity for carboxylic acid or carboxylate group (amino-type, silane-based coupling agent).

Such a silane-based coupling agent as it is may be mixed into the resin composition. Alternatively, the flame-resistant agent, preferably magnesium hydroxide, may be preliminarily coated with such a silane-based agent, prior to mixing into the resin composition.

The unsaturated fatty acid amide is used as a lubricant to the coatings. By conferring lubrication thereto, wear resistance of the coatings is improved. In such unsaturated fatty acid amides, the position of unsaturated bonds, their number and the carbon number of fatty acids are not particularly limited. A preferred example is oleic acid amide.

As mentioned supra, the resin composition of the present invention may contain a polymeric material, a metal hydroxide, a silane-based coupling agent and an unsaturated fatty acid amide. Besides, the resin composition of the invention may further contain an anti-oxidant, an inhibitor to copper-induced damages, a colorant, a lubricant, or the like, which contain practically no halogen. However, their quantity should be limited to an extent that do not impair the wear resistance, flame resistance, mechanical strength etc. of the resin composition.

The resin composition thus prepared has a marked flame resistance, wear resistance and mechanical strength, and is highly suitable for use as an insulating coating material for electrical cables used in automobiles.

### Examples

### [Evaluation Method]

Evaluation methods of the examples of the present invention are described hereinafter.

### 1) Flame resistance

The flame resistance is assessed by Horizontal Burning Tests according to Standards JASO D611.

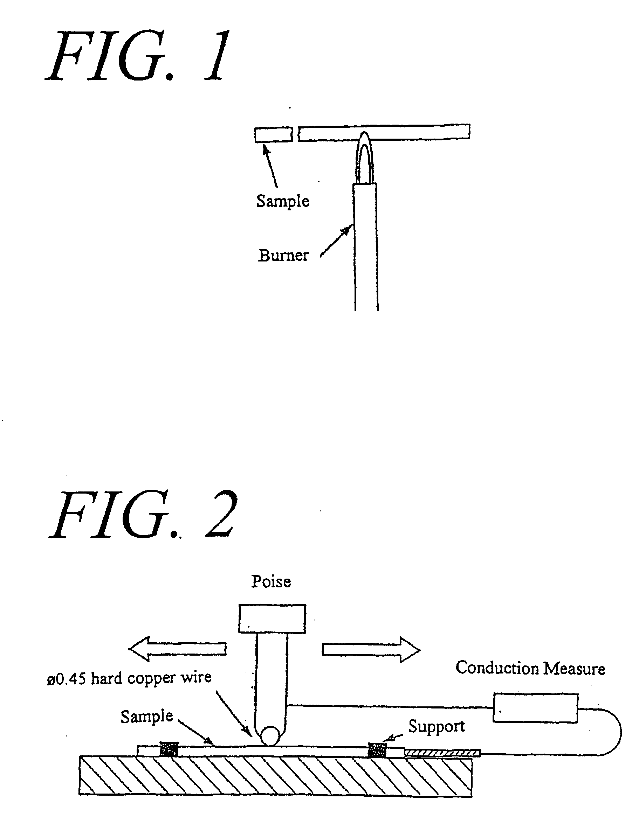

A Bunsen burner having a nozzle diameter of about 10 mm is adjusted so as to obtain a reducing flame length of about 35 mm. A test sample is horizontally kept as shown in FIG. 1. The middle zone of the test sample is heated via flame from underside thereof, such that the test sample lights up within 30 seconds. The flame is then removed with care, and the time passed before the lit-up flame fades away is counted. If the time for flame fade-away is equal to, or less than, 15 seconds, flame resistance is considered to be good.

### 2) Tensile strength (MPa)

The tensile strength is measured by tensile tests of insulating materials according to Standards JASO D611.

A dumb-bell type or tubular test sample is prepared. The test sample is drawn from both ends of the test sample by a Pendulum Tensile Test Machine at a speed of 500 mm / min, and the load at breaking point is measured. If the load is high, the test sample has a good tensile strength. For use as an electrical cable, a tensile strength of at least 10 MPa is required.

### 3) Elongation (%)

In the tensile test mentioned above, elongation of the broken test sample is measured, and elongation rates with regard to the initial sample length are calculated.

### 4) Wear resistance (frequency)

The wear resistance is evaluated by a Blade Reciprocation Test. A test sample having a length of 750 mm is fixed on a plate as shown in FIG. 2. A metal plunger (blade) having a diameter of 0.45 ± 0.015 mm, which uses C-category hard steel wire rod (Standards JIS G3521), is put into contact with the test sample, and a load of 7 N is imparted. The metal plunger is then set to reciprocating motions of 10 mm long at a speed of 50 to 60 times of reciprocation / min, and reciprocation frequency performed before the blade reaches the electrical conductor plate are counted. After testing at one location on the test sample, the latter is moved by 100 mm, rotated by 90° and fixed there. The same testing is then repeated on a new location. The higher the number of reciprocation frequency is, the better the wear resistance is. Reciprocation frequency exceeding 300 times is considered to be good results.

### 5) Flexibility

The flexibility is estimated by "hand" feeling when the test sample is flexed. When the flexibility is sufficiently felt upon flexing, the result is noted as good, otherwise noted as bad.

### 6) Heat-resistant flexibility

A sample of the insulating coating material is put into an oven heated to 150 °C, kept therein for 24 hours, withdrawn therefrom, and allowed to stand at room temperature for at least 4 hours. The sample is thus maintained at high temperature and aged. Within 96 hours, the sample is subjected to a test on a Tensile Testing Machine at a drawing speed of 50 mm/min, to measure tensile strength and elongation. A tensile strength of at least 15.7 MPa and an elongation of at least 100 %, after the above handling, are considered to be good results.

From the result of the elongation at room temperature defined in 3) and of the heat-resistant flexibility defined in 6), a remaining elongation rate (%) can be calculated according to the formula (heat-resistant elongation/elongation at room temperature) x 100. When the remaining elongation rate is high, flexibility in high temperature environments is good.

### [Preparation of the electrical cable]

A conductive wire is prepared by twisting 7 soft copper threads, each having a diameter of 0.32 mm, to obtain a cross-section of 0.5 mm². On the surface thereof is extruded a resin composition having components shown in TABLES 1 and 2 via an extrusion machine, so as to form a coating of 0.3 mm thick. Electrical cable Examples 1 to 18 thus prepared have coatings consisting of different components. Among them, Examples 1 to 4 and 10 to 14 correspond to the electrical cables according to the present invention, whereas Examples 5 to 9 and 15 to 18 those of comparative examples.

The resin compositions are extruded at a dies temperature of 210 °C, at a cylinder temperature of 200 °C, and a line speed of 300 m min for Examples 1 to 9, or of 100 m / min for Examples 10 to 18. P-E block copolymer used is MK640 produced by Kabushiki Kaisha Tokuyama (Tokuyama Corp.). PP homopolymer used is a highly isotactic homopolymer. Magnesium hydroxide used has a particle diameter of 1 µm.

The silane-based coupling agent used is KBM603 (N-β-(aminoethyl)-γ-aminopropyltrimethoxysilane), manufactured by Shin-Etsu Kagaku Kabushiki Kaisha (Shin-Etsu Chemical Co., Ltd.), which is an amino-type, silane-based coupling agent. The aging inhibitor used is Tominox TT, manufactured by Yoshitomi Seiyaku Kabushiki Kaisha (Yoshitomi Fine Chemicals, Ltd.), which is a phenol-type aging inhibitor.

The electrical cable Example 1 to 9 thus prepared are each subjected to the tests concerning flame resistance, wear resistance, tensile strength, elongation and flexibility according to the evaluation methods described above. The results obtained are shown in TABLE I, together with the components of the resin composition. Likewise, Examples 10 to 18 thus prepared are each subjected to the tests concerning flame resistance, tensile strength, elongation, heat-resistant tensile strength, heat-resistant elongation, remaining elongation rate and wear resistance. The results obtained are shown in TABLE II, together with the components of the resin composition.

### [Effect of P-E block copolymer and flame-resistant agents]

**TABLE I**

| | Inventive examples | | | | Comparative examples | | | | |
|---|---|---|---|---|---|---|---|---|---|
| No. | 1 | 2 | 3 | 4 | 5 | 6 | 7 | 8 | 9 |
| Components | | | | | | | | | |
| P-E block copolymer | 90 | 50 | 50 | 50 | 50 | 40 | 100 | - | - |
| P-E random copolymer | - | - | - | - | - | - | - | 50 | - |
| PP homopolymer | - | - | - | - | - | - | - | - | 50 |
| E-VA (VA:10 %) | - | - | - | 50 | - | - | - | - | - |
| E-VA (VA:15%) | - | - | 50 | - | - | - | - | 50 | 50 |
| E-VA (VA:25%) | 10 | 50 | - | - | 50 | 60 | - | - | - |
| Magnesium hydroxide | 100 | 150 | 250 | 150 | 400 | 100 | 20 | 150 | 150 |
| Aging inhibitor | 1 | 1 | 1 | 1 | 1 | 1 | 1 | 1 | 1 |
| Aminosilane coupling agent | - | 0.5 | - | - | - | 0.5 | - | - | - |
| Oleic acid amide | - | 0.5 | - | - | - | 0.5 | - | - | - |
| Total | 201 | 252 | 351 | 251 | 501 | 202 | 121 | 251 | 251 |

| EVALUATION | | | | | | | | | |
|---|---|---|---|---|---|---|---|---|---|
| Flame resistance | good | good | good | good | good | good | bad | good | good |
| Wear resistance (frequency) | 1020 | 340 | 320 | 510 | 120 | 150 | 3650 | 180 | 460 |
| Tensile strength (MPa) | 33 | 14 | 15 | 30 | 22 | 13 | 38 | 18 | 33 |
| Elongation (%) | 570 | 460 | 250 | 80 | 70 | 480 | 320 | 360 | 50 |
| Flexibility | good | good | good | bad | bad | good | bad | good | bad |

By comparing the results obtained with Examples 3 and 8, it can be concluded that random copolymers among P-E copolymers give a product lacking wear resistance. Therefore, a block copolymer is preferably added in the resin composition. Also by comparing the results obtained with Examples 3 and 9, it becomes clear that use of PP homopolymer, instead of a block copolymer, yields too much rigidity, thereby decreasing the elongation capacity and flexibility of the product obtained. Further, by studying the results of Example 7, it becomes apparent that use of a block copolymer alone, without using E-VA copolymer, gives high rigidity and, as a consequence, high wear resistance and tensile strength, but decreases flexibility. However, in order to satisfy contradictory prerequisites such as wear resistance, flexibility and flame resistance at the same time, it seems appropriate to use a mixture system of block copolymer and E-VA copolymer.

Comparison of the results with Example 1 to those with Example 7 indicates that, in order to secure flexibility, E-VA copolymer should be added in a proportion of at least 10 % by weight, relative to the total weight of the polymeric material. It is also clear from comparison of the results obtained with Examples 2 to 4 that the proportion of VA in E-VA copolymer should be at least 15 % by weight. Otherwise, elongation capacity and flexibility of the product will not be sufficiently high.

Further, according to the results obtained with Example 7, when a metal hydroxide as a flame-resisting agent is not added in enough quantity, sufficient flame resistance cannot be obtained. Conversely, when the metal hydroxide is added too much, as in the case with Example 5, wear resistance and tensile strength deteriorate considerably, even though the polymeric material contains a block copolymer and E-VA copolymer in a proper proportion.

When comparing Examples 2 and 3, E-VA copolymer of Example 2 contains higher proportion of VA. Nonetheless, Example 2 has a better wear resistance. This means that addition of a silane-based coupling agent and an unsaturated fatty acid amide improve wear resistance.

Further, according to the results with Example 6, when the proportion of block copolymer in the polymeric material is less than 40 % by weight, sufficient wear resistance cannot be obtained, and this fact cannot be remedied by reducing the quantity of flame-resistant agents, or by adding silane-based coupling agents or unsaturated fatty acid amides.

### [Effect of the vinyl acetate proportion contained in E-VA copolymer]

**TABLE II**

| | Inventive examples | | | | | Comparative examples | | | |
|---|---|---|---|---|---|---|---|---|---|
| No. | 10 | 11 | 12 | 13 | 14 | 15 | 16 | 17 | 18 |
| Components | | | | | | | | | |
| P-E block copolymer | 80 | 80 | 80 | 80 | 80 | 40 | 100 | 50 | 70 |
| E-VA (VA:10 %) | - | - | - | - | 20 | - | - | - | - |
| E-VA (VA:15%) | 20 | - | - | - | - | - | - | - | - |
| E-VA (VA:25%) | - | 20 | - | - | - | - | - | 50 | 30 |
| E-VA(VA:33%) | - | - | 20 | - | - | - | - | - | - |
| E-VA(VA:46%) | - | - | - | 20 | - | 60 | - | - | - |
| Magnesium hydroxide | 90 | 90 | 90 | 90 | 150 | 90 | 90 | 10 | 400 |
| Aging inhibitor | 1 | 1 | 1 | 1 | 1 | 1 | 1 | 1 | 1 |
| Total | 191 | 191 | 191 | 191 | 251 | 191 | 191 | 111 | 501 |

| EVALUATION | | | | | | | | | |
|---|---|---|---|---|---|---|---|---|---|
| Flame resistance | good | good | good | good | good | good | bad | bad | good |
| Tensile strength (MPa) | 23.0 | 21.4 | 21.0 | 19.6 | 22.2 | 18.7 | 22.6 | 20.2 | 23.0 |
| Elongation (%) | 415 | 587 | 627 | 585 | 260 | 655 | 13 | 640 | 65 |
| Heat resistant tensile strength (Mpa) | 22.7 | 22.2 | 20.8 | 18.7 | 25.1 | 19.5 | 23.3 | 20.7 | 23.4 |
| Heat-resistant elongation (%) | 145 | 216 | 242 | 303 | 86 | 345 | 10 | 610 | 25 |
| Remaining elongation rate (%) | 35 | 37 | 39 | 52 | 33 | 53 | 77 | 95 | 38 |
| Wear resistance (frequency) | 1330 | 1146 | 956 | 746 | 2143 | 57 | 1x10⁴ | 187 | 108 |

The results obtained with Examples 10 to 14 indicate that, as the proportion of vinyl acetate contained in E-VA copolymer increases, wear resistance of the Examples decreases, but elongation and heat-resistant flexibility increase. In particular, in the case of Example 13 in which vinyl acetate content is in excess of 40 % by weight, remaining elongation rate is high. This means that, even if E-VA copolymer has undergone aging at high temperatures, Example 13 retains a sufficiently high flexibility.

The results obtained with Example 15 indicate that, when the proportion of E-VA copolymer in the polymeric material is in excess of 45 % by weight, wear resistance becomes too low. Conversely, the results obtained with Example 16 show the case in which E-VA copolymer is not added. In this case, though wear resistance is good, flexibility is deteriorated, and, even if magnesium hydroxide is added in an appropriate amount, flame resistance is not on a satisfactory level.

In the case of Example 17 in which only a small quantity of magnesium hydroxide is added, flame resistance is not sufficiently good. On the contrary, when the amount of magnesium hydroxide is increased too much (case with Example 18), flexibility is unsatisfactory, and wear resistance is damaged.

Examples 2 to 4 in TABLE I each contain a different proportion of vinyl acetate in E-VA copolymer, whereas Examples 10, 11 and 14 in TABLE II contain a corresponding proportion of vinyl acetate, respectively. By comparing the resin compositions having the same vinyl acetate proportion, it can be concluded that the higher the proportion of P-E block copolymer in the polymeric material is, the better the wear resistance of the resin composition is.

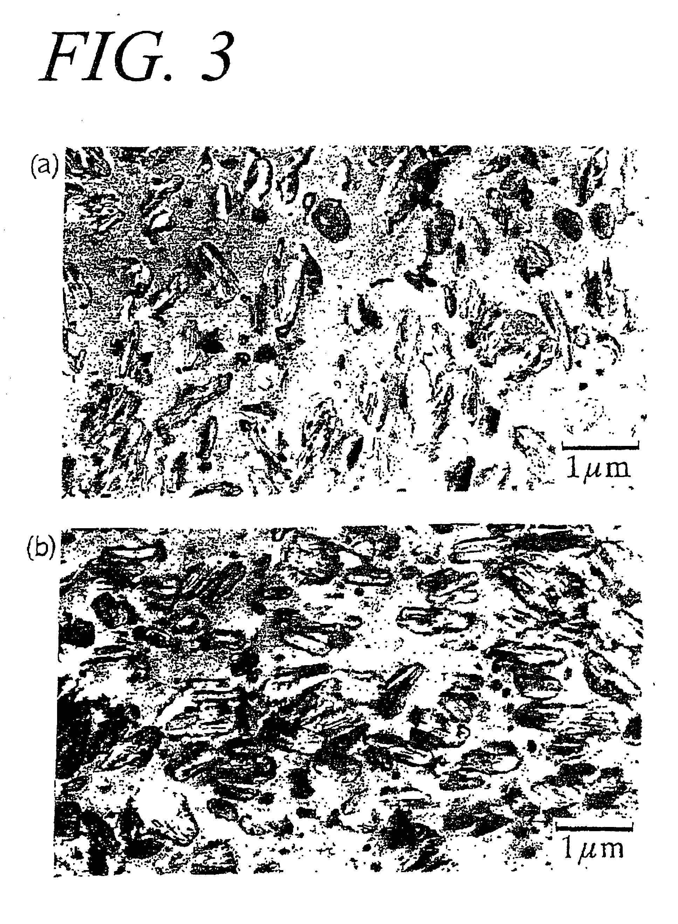

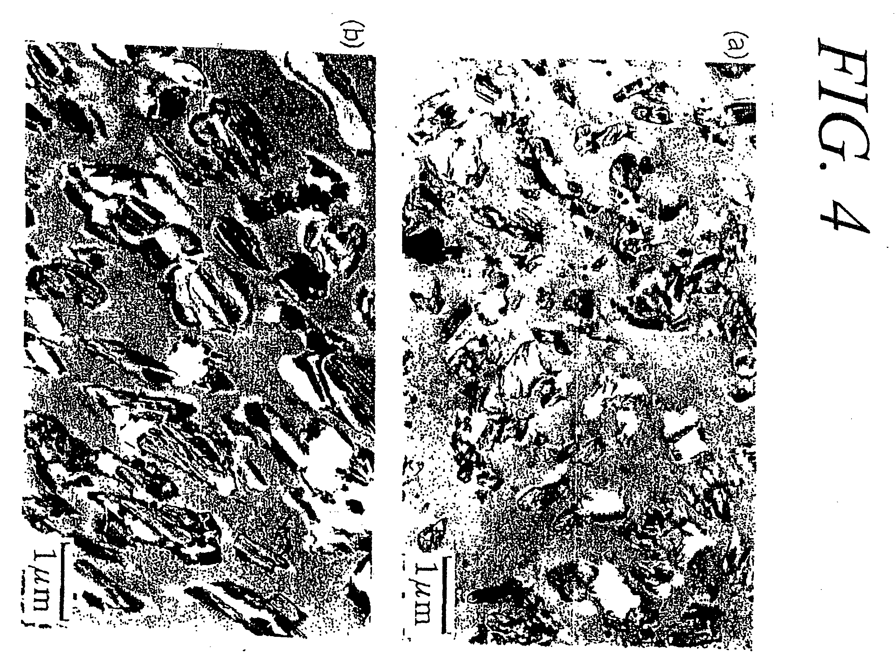

The coating materials of Examples 11 and 13 are subjected to heat-resistant flexibility testing, and the texture before and after the testing is observed on a microscope. FIG. 3 is a microscopic view of Example 11 before (a) and after (b) having been kept at high temperatures. Likewise, FIG. 4 is a microscopic view of Example 13 before (a) and after (b) having been kept at high temperatures. In these microscopic view, rather large particles having a striped pattern indicate magnesium hydroxide, and black particles E-VA copolymer. In FIGS. 3 (a) and 4 (a), i.e. before having been kept at high temperatures, E-VA copolymer particles are dispersed in a vast screen of block copolymer, as though islands are scattered in the sea. In FIGS. 3 (b) and 4 (b), i.e. after having been kept at high temperatures, black particles of E-VA polymer are gathered around magnesium hydroxide or other particles. This tendency is stronger in FIG. 4 (b). The above phenomenon can be explained by the fact that the vinyl acetate moiety of E-VA copolymer contains a polar radical having a high affinity to polar compounds such as magnesium hydroxide, and that, as the content of vinyl acetate in E-VA copolymer becomes higher, the vinyl acetate does gather and is stuck around magnesium hydroxide. Then, even when tensile forces are exerted from exterior, phase separation between magnesium hydroxide and block copolymer is prevented, so that a high level of elongation capacity is maintained. As described above, when kept at high temperatures, elongation performance is lowered not only by aging of polymer, in particular E-VA copolymer, but also by phase separation between a metal hydroxide and a block copolymer. In the case of Example 13, the vinyl acetate content in E-VA copolymer is high. In such a case, when retained at high temperatures, the E-VA copolymer is gathered around metal hydroxides in a higher proportion. As E-VA copolymer is interposed between a block copolymer and a metal hydroxide, phase separation therebetween is suppressed. As a result, lowering of the elongation level owing to phase separation is minimized.

### [Effect of silane-based coupling agents]

Resin compositions are prepared by mixing 2 parts by weight of silane-based coupling agents listed in TABLE III, with 100 parts by weight of E-VA copolymer, the VA content of which is 26 % by weight ("Ultrasen 634" manufactured by Kabushiki Kaisha Tôsô, also known as Tosoh Corporation), and with 100 parts by weight of flame-resistant magnesium hydroxide, the surface of which is not treated ("Kisuma 5", manufactured by Kyowa Kagaku Kabushiki Kaisha, also known as Kyowa Chemical Industry Co., Ltd.).

**TABLE III**

| Silane-based coupling agents | | General assessment |
|---|---|---|
| Products | Type | |
| KBM1003 | Vinyl-type | X |
| KBM503 | Acryl-type | X |
| KBM403 | Epoxy-type | O |
| KBM603 | Amino-type | ● |
| KBM903 | Amino-type | O |
| KBM803 | Mercapto-type | X |

In TABLE III, KBM1003, KBM503, KBM403, KBM603, KBM903 and KBM803 signify vinyltrimethoxysilane, γ-methacryloxypropyl trimethoxy silane, γ-glycidoxy propyltrimethoxysilane, N-β-(aminoethyl)-γ-aminopropyl trimethoxysilane, γ-aminopropyl trimethoxysilane and γ-mercaptopropyl trimethoxysilane, respectively.

By using the resin compositions thus prepared, electrical cables are manufactured according to the methods supra. Each electrical cable is then subjected to tensile and elongation testing. The results of the testing of the electrical cables obtained, when a silane-based coupling agent is added, are compared with the results obtained, when this agent is not added. The outcome of the assessment is indicated in TABLE III, in which the following symbols are used:
- ×: lowered
- O: improved
- ●: greatly improved

According to TABLE III, when amino-type silane-based coupling agents such as KBM603 and 903, or epoxy-type silane-based coupling agents such as KBM403 are used, the results of tensile and elongation testing are improved vis-à-vis the cases where these coupling agents are not used. In particular, KBM603 gives a good result.

The flame- and wear-resisting resin compounds according to the present invention do not contain halogen atoms, and are therefore environment-friendly. Although the resin compositions contain metal hydroxides as flame retarder, their physical properties such as wear resistance, mechanical strength and flexibility are maintained intact. For this reason, the resin compositions of the invention can be advantageously used for the electrical cable coating materials, for which these physical properties are prerequisite.

## Claims

1. A flame- and wear-resistant resin composition comprising a polymeric material consisting of a propylene-ethylene block copolymer and an ethylene-vinyl acetate random copolymer, and a metal hydroxide, said polymeric material including said propylene-ethylene block copolymer in a proportion ranging from 90 to 45 % by weight with respect to the weight of the polymeric material, while said ethylene-vinyl acetate copolymer in a proportion ranging from 10 to 55 % by weight, said resin composition including said metal hydroxide ranging from 30 to 300 parts by weight, relative to 100 parts by weight of said polymeric material.

2. The flame- and wear-resistant resin composition according to claim 1, wherein said ethylene-vinyl acetate copolymer contains vinyl acetate in a proportion of at least 15 % by weight, relative to the weight of said ethylene-vinyl acetate copolymer.

3. The flame- and wear-resistant resin composition according to claim 1, wherein said ethylene-vinyl acetate copolymer contains vinyl acetate in a proportion of at least 40 % by weight, relative to the weight of said ethylene-vinyl acetate copolymer.

4. The flame- and wear-resistant resin composition according to any one of claims 1 to 3, further comprising silane-based coupling agents in a proportion of at least 0.1 part by weight, relative to 100 parts by weight of said polymeric material.

5. The flame- and wear-resistant resin composition according to claim 4, wherein said silane-based coupling agent is an ammo-containing product.

6. The flame- and wear-resistant resin composition according to any one of claims 1 to 5, further comprising unsaturated fatty acid amides in a proportion of at least 0.1 part by weight, relative to 100 parts by weight of said polymeric material.

7. An electrical cable for automobiles, said electrical cable comprising an insulating coating which includes a flame- and wear-resistant resin composition defined in any one of claims 1 to 6.

8. Use of the flame- and wear-resistant resin composition defined in any one of claims 1 to 6, as a coating material.

## Patentansprüche

1. Flammhemmende und abriebfeste Harzzusammensetzung, umfassend ein Polymermaterial, betehend aus einem Propylen-Ethylen-Blockcopolymer und einem statistischen Ethylen-Vinylacetat-Copolymer, und ein Metallhydroxid, wobei das Polymermaterial das Propylen-Ethylen-Blockcopolymer in einem Anteil, welcher von 90 bis 45 Gew.-% in bezug auf das Gewicht des Polymermaterials reicht, während es das Ethylen-Vinylacetat-Copolymer in einem Anteil enthält, welcher von 10 bis 55 Gew.-% reicht, wobei die Harzzusammensetzung das Metallhydroxid in einem Bereich von 30 bis 300 Gewichtsteilen, in bezug auf 100 Gewichtsteile des Polymermaterials enthält.

2. Flammhemmende und abriebfeste Harzzusammensetzung nach Anspruch 1, worin das Ethylen-Vinylacetat-Copolymer Vinylacetat in einem Anteil von wenigstens 15 Gew.-% in bezug auf das Gewicht des Etylen-Vinylacetat-Copolymers enthält.

3. Flammhemmende und abriebfeste Harzzusammensetzung nach Anspruch 1, worin das Ethylen-Vinylacetat-Copolymer Vinylacetat in einem Anteil von wenigstens 40 Gew.-% in bezug auf das Gewicht des Ethylen-Vinylacetat-Copolymers enthält.

4. Flammhemmende und abriebfeste Harzzusammensetzung nach einem der Ansprüche 1 bis 3, weiters umfassend Kupplungsmittel auf Silan-Basis in einem Anteil von wenigstens 0,1 Gewichtsteilen in bezug auf 100 Gewichtsteile des Polymermaterials.

5. Flammhemmende und abriebfeste Harzzusammensetzung nach Anspruch 4, worin das Kupplungsmittel auf Silan-Basis ein Amino-enthaltendes Produkt ist.

6. Flammhemmende und abriebfeste Harzzusammensetzung nach einem der Ansprüche 1 bis 5, weiter umfassend ungesättigte Fettsäureamide in einem Anteil von wenigstens 0,1 Gewichtsteilen in bezug auf 100 Gewichtsteile des Polymermaterials.

7. Elektrisches Kabel für Automobile, wobei das elektrische Kabel eine isolierende Beschichtung umfaßt, welche eine flammhemmende und abriebfeste Harzzüsammensetzung enthält, welche in einem der Ansprüche 1 bis 6 definiert ist.

8. Verwendung der flammhemmenden und abriebfesten Harzzusammensetzung, welche in einem der Ansprüche 1 bis 6 definiert ist, als ein Beschichtungsmaterial.

## Revendications

1. Composition de résine résistant à l'inflammation et à l'usure, comprenant une matière polymère, qui consiste en un copolymère séquencé de propylène - éthylène et un copolymère statistique d'éthylène - acétate de vinyle, et un hydroxyde métallique, la dite matière polymère incluant le dit copolymère séquencé de propylène - éthylène dans une proportion comprise entre 90 et 45% en poids par rapport au poids de la matière polymère tandis que le dit copolymère d'éthylène - acétate de vinyle est dans une proportion comprise entre 10 et 55% en poids, la dite composition de résine incluant le dit hydroxyde métallique dans une proportion comprise entre 30 et 300 parties en poids pour 100 parties en poids de la dite matière polymère.

2. Composition de résine résistant à l'inflammation et à l'usure selon la revendication 1, dans laquelle le dit copolymère d'éthylène - acétate de vinyle contient l'acétate de vinyle dans une proportion d'au moins 15% en poids par rapport au poids du dit copolymère d'éthylène - acétate de vinyle.

3. Composition de résine résistant à l'inflammation et à l'usure selon la revendication 1, dans laquelle le dit copolymère d'éthylène - acétate de vinyle contient l'acétate de vinyle dans une proportion d'au moins 40% en poids par rapport au poids du dit copolymère d'éthylène - acétate de vinyle.

4. Composition de résine résistant à l'inflammation et à l'usure selon une quelconque des revendications 1 à 3, comprenant en outre des agents de couplage à base de silane dans une proportion d'au moins 0,1 partie en poids pou 100 parties en poids de dite matière polymère.

5. Composition de résine résistant à l'inflammation et à l'usure selon la revendication 4, dans laquelle le dit agent de couplage à base de silane est un produit contenant un radical amino.

6. Composition de résine résistant à l'inflammation et à l'usure selon une quelconque des revendications 1 à 5, comprenant en outre des amides d'acide gras insaturé dans une proportion d'au moins 0,1 partie en poids pour 100 parties en poids de dite matière polymère.

7. Câble électrique pour automobiles, le dit câble électrique comprenant un revêtement isolant qui inclut une composition de résine résistant à l'inflammation et à l'usure selon une quelconque des revendications 1 à 6.

8. Utilisation de la composition de résine résistant à l'inflammation et à l'usure selon une quelconque des revendications 1 à 6, comme matière de revêtement.
